Europäisches Patentamt

European Patent Office

Office européen des brevets

(11) Veröffentlichungsnummer: **0 045 343**
B1

# EUROPÄISCHE PATENTSCHRIFT

(45) Veröffentlichungstag der Patentschrift:
18.07.84

(51) Int. Cl.³: **H 02 G 3/26**, H 02 G 13/00

(21) Anmeldenummer: **81100915.8**

(22) Anmeldetag: **10.02.81**

(54) **Schraubbefestigung von Blitzableiterleitungen an Leitungshaltern oder dergleichen.**

(30) Priorität: **30.07.80 DE 3028814**
**24.09.80 DE 3035924**

(43) Veröffentlichungstag der Anmeldung:
**10.02.82 Patentblatt 82/6**

(45) Bekanntmachung des Hinweises auf die Patenterteilung:
**18.07.84 Patentblatt 84/29**

(84) Benannte Vertragsstaaten:
**AT BE CH DE FR GB IT LI LU NL SE**

(56) Entgegenhaltungen:
**CH - A - 166 120**
**DE - A - 1 949 266**
**DE - B - 1 097 766**
**DE - B - 1 142 085**
**DE - C - 375 380**
**FR - A - 1 191 504**
**US - A - 1 718 751**
**US - A - 2 570 957**
**US - A - 3 600 503**

**Zeitschrift "Der Blitzableiter", Nr. 1 vom April 1956,**
**Normschrift TGL 200-0616/02 Blitzschutzmassnahmen**
**technische Forderungen" DDR vom März 1976**

(73) Patentinhaber: **DEHN + SÖHNE GMBH + CO KG,**
**Rennweg 11 - 15, D-8500 Nürnberg (DE)**

(72) Erfinder: **Dehn, Richard, Am Königsberg 3,**
**D-8430 Neumarkt (DE)**

(74) Vertreter: **Richter, Bernhard, Dipl.-Ing.,**
**Beethovenstrasse 10, D-8500 Nürnberg 20 (DE)**

## Beschreibung

Die Erfindung betrifft eine Schraubbefestigung von Blitzableiterleitungen an Leitungshaltern oder dergleichen gemäß den Oberbegriffen der Ansprüche 1 und 9.

Es ist bekannt, die Blitzableiterleitungen (im folgenden der Kürze wegen nur noch Leitungen genannt) mit einem Überleger und zwei Schrauben am Leitungshalter oder dergleichen zu befestigen. Leitungshalter können am Dach oder an einer Wand angebracht und unterschiedlich ausgebildet sein. Bei dieser Art der Leitungsbefestigung ist es nachteilig, daß sie aufgrund der Form der Überleger nur zum Anklemmen von Leitungen eines bestimmten, begrenzten Durchmesserbereiches, z. B. von 7 bis 10 mm Durchmesser, geeignet ist. Für die Führung der Leitung längs und quer zum Leitungshalter sind jeweils zwei Ausführungen auf Lager zu nehmen. Bei der Montage auf dem Dach muß der Monteur in umständlicher Weise eine der Schrauben ganz und die zweite Schraube zumindest ein Stück weit herausschrauben, danach die Leitung einlegen, die erste Schraube wieder in ihr Gewindeloch einbringen und schließlich beide Schrauben anziehen. Insbesondere bei ungünstiger Witterung ist diese Arbeit nur schwer durchzuführen, wobei trotz aller Aufmerksamkeit die Gefahr besteht, daß dem Monteur die erstgenannte Schraube aus der Hand fällt und nicht oder nur mühsam wieder beschafft werden kann.

Aus der DE-A-2 539 705 ist ein Halteelement für die Befestigung einer Leitung am jeweiligen Tragelement durch Hintergreifen oder eine Schnappverbindung bekannt, bei dem zwar Befestigungsschrauben vermieden sind. Doch ist diese Halteanordnung jeweils nur für einen bestimmten Leitungsdurchmesser geeignet.

Ein Leitungshalter nach der DE-C-2 539 747 verlangt ein einem Klemmstück angepaßtes Tragstück am Leitungshalter. Das Klemmstück kann vom Leitungshalter abgezogen werden, ist also nicht gegen ein versehentliches Herabfallen sicherbar. Es muß ferner in seiner Formgebung im wesentlichen der Außenform der anzuklemmenden Leitung angepaßt sein, so daß hier ebenfalls für unterschiedlich dicke Leitungen verschiedene Klemmstücke erforderlich sind.

Aus der Zeitschrift »Der Blitzableiter«, Nr. 1 vom April 56, Seiten 5 bis 8 ist ein Klemmschraubensystem bekannt, bei dem der Schraubenschaft mit dem Schraubenkopf eine langgestreckte Öffnung bildet, in welche die anzuklemmende Leitung eingefädelt werden muß, da diese Öffnung beidseitig geschlossen und nur an ihren Stirnenden offen ist. Daher kann man hiermit ungeschnittene Leitungen nicht erfassen und anklemmen. Es sind mit diesem vorbekannten Klemmschraubensystem zwar Leitungen unterschiedlicher Durchmesser anklemmbar, doch ist der Bereich, innerhalb dessen der Leitungsdurchmesser variieren kann, nicht sehr groß.

Aus der US-A-1 718 751 ist eine Leitungsklemme bekannt, die sich nicht auf das Anklemmen von Blitzableiterleitungen und auch nicht auf deren Anklemmen an ebene Leitungshalter bezieht. Der Gegenstand dieser Vorveröffentlichung fällt damit nicht unter den Oberbegriff der Ansprüche 1 und 9. Der Klemmteil ist zwar hakenförmig, doch ist der das Schraubgewinde des Klemmteiles aufnehmende Klemmkörper mit einer etwa halbkreisförmigen Aufnahmeöffnung für die anzuklemmende Leitung versehen, deren äußerer Rand hakenförmig ausgebildet und zum Hakenende des Klemmteiles hin gerichtet ist. Die vorstehend beschriebene Ausgestaltung hat zur Folge, daß die anzuklemmende Leitung ebenfalls in die etwa kreisförmige Öffnung zwischen Klemmteil und Klemmkörper eingefädelt werden muß, nicht aber von der Seite her darin eingelegt werden kann. Es besteht also auch hier der Mißstand, daß man ungeschnittene Leitungen nicht erfassen und anklemmen kann; es sei denn man würde in sehr umständlicher und zeitraubender Weise den Klemmteil durch Abschrauben der Gewindemutter und Herausziehen aus dem Klemmkörper völlig von diesem lösen und nach dem Einlegen der Leitung wieder damit verbinden. Dies kostet nicht nur Arbeitszeit, sondern würde bei Anwendung im Blitzableiterbau bei der Arbeit im Freien, insbesondere bei schlechter Witterung zu erheblichen Erschwerungen, u. a. Herunterfallen von Teilen, führen. Außerdem ist die Formgebung des vorbekannten Klemmkörpers sehr umständlich und damit in der Herstellung aufwendig.

Aus der Normschrift TGL 200-0616/02 »Blitzschutzmaßnahmen technische Forderungen« der Deutschen Demokratischen Republik vom März 1976 ist eine Schraubbefestigung gemäß den Oberbegriffen der Ansprüche 1 und 9 bekannt, die aus einer Gewindeschraube mit Schraubenkopf und einer Klemmbacke besteht, die zweiarmig ausgebildet ist und vom Schraubenschaft durchsetzt wird. Dabei kann nachteiligerweise zum einen die Klemmbacke verloren gehen, da sie mit der Schraube nicht fest verbunden ist. Zum anderen ist keine genügende Anpassung an den Durchmesser- oder Dickenbereich der anzuklemmenden Leitung offenbart. Insbesondere ist die Winkellage der Klemmbacke zur Gewindeschraube nicht veränderbar.

Schließlich zeigt die DE-B-1 142 085 eine einstückige Schelle zur Befestigung von Leitungen oder Kabeln unmittelbar an einer Wand oder an einer anderen Unterlage, deren starrer, vorzugsweise aus Kunststoff bestehender Schellenkörper sich mit einem Ende auf der Unterlage abstützt und deren Befestigungsstift zwischen dem Stützende und der zu haltenden Leitung angeordnet ist. Der Befestigungsstift ist ein Nagel, der in die Wand oder Unterlage eingetrieben wird. Dies ist keine Schraubbefestigung von Blitzableiterleitungen. Die Anordnung nach der DE-B-1 142 085 erfüllt also nicht den Oberbegriff des Anspruches 1. Der Schellenkörper besteht dort zwar aus einem gegen die Unterlage konkav gekrümmten Balken, wobei ein Ende des Balkens sich an der Unterlage abstützt und der Bereich nahe des anderen Balkenendes an der konkaven Seite als Klemmfläche zum Halt der Leitung oder des Kabels dient. Jedoch kann aus den nachstehenden Gründen diese Vorveröffentlichung dem Fachmann keine Anregung geben, gemäß der vorliegenden Erfindung vorzugehen. Das Befestigen einer solchen Halterung an der Unterlage mittels Nagelung ist für den Halt von Blitzableiterleitungen aus mehreren Überlegungen nicht möglich. Blitzableiterleitungen werden überwiegend am Dach oder an Außenwänden verlegt. Solche Bautenteile bestehen aber durchweg aus sehr harten Werkstoffen (Ziegel, Stein, Beton), in die nicht hineingenagelt werden kann. Die auf Blitzableiterleitungen im Betrieb durch Witterung (z. B. Schneelast), Temperaturschwankungen und die dadurch bewirkten Längenveränderungen, sowie auch durch das Angreifen seitens Menschen wirkenden Kräfte sind so groß, daß sie Nägel aus ihrem Nagelloch herausziehen würden. Falls sich nachträglich die Erfordernis ergeben sollte, die Blitzableiterleitung in ihrer Längsrichtung zu verschieben, müßten hierfür sämtliche Nägel in ihren Nagellöchern gelockert und ein stück herausgezogen werden. Dies ist nicht nur sehr umständlich sondern führt in der Regel zur Beschädigung der Nägel und der Klemme sowie des sie tragenden, also das Nagelloch aufweisenden Bautenteils. Das gleiche gilt für den Fall, daß eine beschädigte Blitzableiterleitung durch eine neue ausgewechselt werden soll, wobei aber die vorhandenen Haltestellen nicht geändert werden müssen. Blitzableiterleitungen müssen an einigen Stellen in Schleifen gelegt werden, z. B. bei ihrer Führung über Dachvorsprünge. Im Falle eines Blitzeinschlages bewirken aber die sehr hohen Blitzströme so große stromdynamische Kräfte, daß sie die Nagelbefestigungen aus dem Bauteil herausreißen würden. Die Anordnung nach dieser Vorveröffentlichung verbietet sich also aus einer ganzen Reihe von Gründen für den Einsatz zum Halt von Blitzableiterleitungen und kann daher auch nicht für dieses Sachgebiet als Vorbild oder Anregung dienen.

Die Aufgabe der Erfindung besteht demgegenüber darin, bei Beibehaltung der Größe der Einlegeöffnung am Schraubenkopf oder an der Klemmbacke den größenmäßigen (bezogen auf den Durchmesser oder die Dicke der anzuklemmenden Leitung) Anwendungsbereich der Erfindung zu erweitern.

Zur Lösung dieser Aufgabe sieht die Erfindung daher zunächst eine Schraubbefestigung gemäß dem Anspruch 1 vor.

Hierdurch sind zusätzliche Mittel zur Veränderung des Umfangs des Durchmesser- oder Dikkenbereiches der anzuklemmenden Leitungen geschaffen.

Die bisher bekannten Mittel bestanden nur aus einer bestimmten Größe der Einlegeöffnung und einer Schraubmutter, durch deren Verdrehen der Schraubenschaft in Längsrichtung verstellt und damit die Einlegeöffnung um ein gewisses Maß vergrößert oder verkleinert wurde. Dem überlagern sich nun diese zusätzlichen Mittel, die sowohl zu einer weiteren Verringerung als auch zu einer weiteren Vergrößerung des Durchmesser- oder Dickenbereiches führen können. Hinzu kommen die Vorteile, daß keine Schrauben vollständig zu lösen sind, sondern daß die Leitungen sehr unterschiedlichen Durchmessers bzw. Dicke bei nur gelockerter Schraubmutter eingelegt werden können. Die Hindurchführung der Schraube gibt die Möglichkeit (hierzu wird auf die späteren Ausführungen verwiesen), die Schraubbestigung unverlierbar am Leitungshalter oder dergleichen zu befestigen. Ein solcher Verlust, der sowohl während des Transportes, als auch bei der Montage eintreten könnte, wäre in der Praxis äußerst störend, da er zu kostspieligen Unterbrechungen der Montagearbeit führen kann. Es ist das seitliche Einlegen (kein Einfädeln) und Einklemmen von Leitungen sehr unterschiedlicher Durchmesser möglich. Durch Drehen der Schraube um 90° um ihre Längsachse kann rasch von einer Längsführung zu einer Querführung der Leitung zum Leitungshalter übergegangen werden. Für das Lösen und Anklemmen genügt ein Steck-, Ring- oder Gabelschlüssel zum Verdrehen der Schraubmutter. Dies ist wesentlich problemloser als die Verwendung eines Schraubenziehers, da erfahrungsgemäß Einsteckschlitze in Schraubköpfen sich unter dem Einfluß der Witterung, durch Staub usw. leicht zusetzen. Die nachteiligen Überleger und auch die übrigen Nachteile des erläuterten Standes der Technik sind vermieden.

Die Ausgestaltung dieser Schraubbefestigung ergibt eine sehr stabile Abstützung der von der Mutter erzeugten Klemmkraft am Leitungshalter oder dergleichen. Ferner erlaubt dies eine Ausweitung des Durchmesserbereiches des anzuklemmenden Leiters von seinem Maximalwert, z. B. 10 mm bis auf einen Minimumwert nahe 0 mm, da hierbei der die Einlegeöffnung aufweisende Teil der Schraube bzw. eines noch näher zu erläuternden Schrauben- oder Klemmkörpers mit dem Anziehen der Mutter in den Abstandsteil hineingezogen werden kann.

Die o. g. Aufgabe der Erfindung wird ferner durch eine Schraubbefestigung gemäß Anspruch 9 gelöst.

Auch hiermit sind zusätzliche Mittel zur Veränderung des Umfangs des Durchmesser- oder Dickenbereiches der anzuklemmenden Leitung vorgesehen. Es können also ebenfalls Leitungen sehr unterschiedlichen Durchmessers, z. B. in einem Bereich von 6 bis 10 mm angeklemmt werden, ohne daß der Abstandsteil der erstgenannten Ausführungsform vorgesehen sein muß.

Gemäß Anspruch 16 könnte man aber auch die zuletzt erläuterte zweitgenannte Ausführung der Erfindung mit als Hebel ausgestalteter Klemmbacke mit dem Abstandsteil der erstgenannten Ausführungsform zusammen vorsehen, um den Durchmesser- oder Dickenbereich noch mehr zu verändern. Außerdem verhindert der Abstandsteil in Fällen, in denen der Durchbruch am Leitungshalter gegenüber dem Schraubenschaftdurchmesser relativ groß ist, ein Hindurchrutschen der Schraube mit Mutter durch den Durchbruch eines solchen Abstandsteiles. Sowohl bei der erstgenannten Ausführung mit dem Abstandsteil, als auch bei der zweitgenannten Ausführung mit der hebelartigen, verschwenkbaren Klemmbacke kann man die hierdurch gegebene Erweiterung des Durchmesser- oder Dikkenbereiches auch dahingehend ausnützen, daß man in Fällen, in denen dieser Bereich nicht allzu groß sein muß, dann die Tiefe der Einlegeöffnung verringert.

Die zweitgenannte Ausführung der Erfindung kann noch dahingehend verbessert werden, daß die Klemmbacke am Schraubenkopf unverlierbar gehalten ist. Hierzu können gemäß einer weiteren Ausgestaltung der Erfindung aus dem Material der Klemmbacke herausgedrückte Nasen dienen.

Gemäß einer anderen Ausgestaltung der Erfindung weist die Klemmbacke eine sich von der Lagerstelle des Schraubenkopfes in Richtung zum freien Schraubenschaftende hin im Durchmesser erweiternde Bohrung auf, die für die Hindurchführung des Schraubenschaftes dient. Dieses Merkmal unterstützt die Erzielung der genannten Schwenk- oder Wippbewegung der Klemmbacke zum Schraubenschaft. Die Klemmbacke kann sich damit am Schraubenkopf abwälzen.

In Weiterbildung der zuletzt erläuterten Schraubbefestigung kann als Schraubenkopf ein quer zum Schraubenschaft verlaufender, zu diesem den Querbalken eines »T« bildenden Lagerstab dienen, wobei die Klemmbacke eine der Stabform angepaßte Ausnehmung für die Aufnahme des Lagerstabes aufweist und wobei die Nasen vom Außenrand der Ausnehmung gebildet sind und über den Lagerstab greifen und der von den Nasen und der Ausnehmung gebildete Lagerraum im Durchmesser etwas größer als der Durchmesser des Lagerstabes ist. Statt dessen kann auch vorgesehen sein, daß als Schraubenkopf ein Mehrkantkopf, z. B. ein Sechskantkopf dient, daß die Klemmbacke eine der Form des Mehrkantkopfes angepaßte Ausnehmung für dessen Aufnahme aufweist, deren Boden nach außen hin, d. h. in Richtung zur freien Stirnfläche des Mehrkantkopfes kuppenartig vorgewölbt ist und daß der Abstand zwischen den Nasen und dem Boden etwas größer ist als die Dicke des Mehrkantkopfes.

Schließlich wird gemäß einer weiteren Ausführungsform der Erfindung vorgeschlagen, daß der die Auskehlung aufweisende effektive Hebelarm länger ist als der mit dem Vorsprung versehene effektive Hebelarm. Dabei wird unter effektivem Hebelarm der Hebelarm verstanden, der in der Praxis wirksam ist, d. h. der Abstand zwischen der Mitte der Einlegeöffnung und der Mitte der Schraubenachse einerseits, sowie zwischen der Mitte der Schraubenachse und der Abstützung oder Vorsprung andererseits.

Die Erfindung ist zum Anklemmen von im Querschnitt kreisförmigen oder im Querschnitt flachen Leitungen geeignet, wobei noch zu bemerken ist, daß in der Praxis überwiegend Rundleiter zur Verlegung kommen.

Zusammengefaßt ergibt sich eine in ihrer Konstruktion relativ einfache und sehr unterschiedlichen Durchmesser- oder Dickenbereichen anpaßbare Klemmvorrichtung, die aus den dargelegten Gründen sowohl an Montagekosten, als auch an Lagerhaltungskosten spart, da sie praktisch für alle vorkommenden Leitungsdurchmesser und Leitungsführungen geeignet, bzw. diesen anpaßbar ist.

Weitere Vorteile der Erfindung sind den abhängigen Ansprüchen, deren Inhalt hier mit zum Inhalt der Beschreibung gemacht wird, sowie der weiteren nachstehenden Beschreibung und der Zeichnung von erfindungsgemäßen Ausführungsbeispielen zu entnehmen. In der Zeichnung zeigt

Fig. 1 ein erstes Ausführungsbeispiel nach der Erfindung zum Teil im Schnitt,

Fig. 2 einen Schnitt gemäß der Schnittlinie II-II in Fig. 1,

Fig. 2a eine Teilansicht auf den Boden des Abstandsteiles,

Fig. 3 ein anderes Ausführungsbeispiel der Erfindung,

Fig. 4 ein weiteres Ausführungsbeispiel in der Draufsicht,

Fig. 5 einen Schnitt gemäß der Linie V-V in Fig. 4,

Fig. 6 ein weiteres Ausführungsbeispiel der Erfindung in der Draufsicht,

Fig. 7 einen Schnitt gemäß der Linie VII-VII in Fig. 6,

Fig. 8 bis 12 einige Beispiele von Dachleitungshaltern, an denen eine Schraubbefestigung nach der Erfindung anbringbar ist.

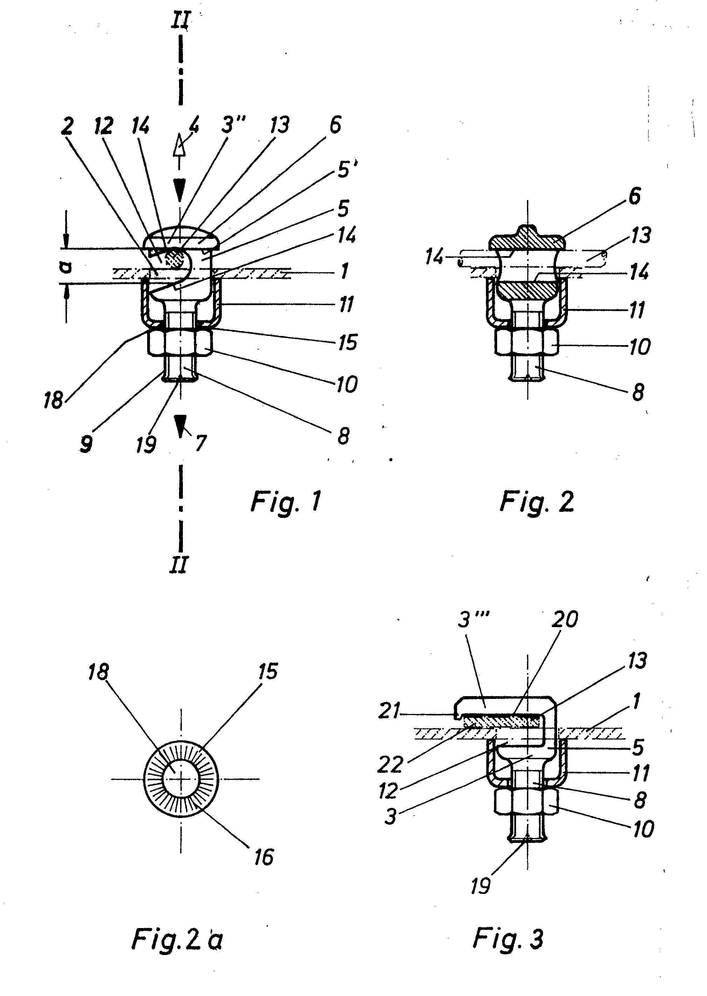

Die Fig. 1 und 2 zeigen jeweils im Schnitt zusammen mit einem Dachleitungshalter 1 ein erstes Ausführungsbeispiel der Erfindung. Durch einen Durchbruch 2 des Dachleitungshalters 1 ist jeweils ein Schraubenschaft 8 gesteckt, der an seinem kopfseitigen Ende einen backenartigen oder hakenförmigen Teil 3″ aufweist, der sich vom Schraubenkopf 5 her zur Seite erstreckt. Das Schraubgewinde 9 des Schraubenschaftes 8 ist so lang, daß mit dem Abziehen der Feststellmutter 10 Rundleiter 13 sehr unterschiedlichen Durchmessers festgeklemmt werden können. An der freien Stirnseite des Schraubenschaftes 8 kann durch einen Kerbschlag, Körnerschlag oder dergleichen eine Sicherung 19 gegen ein versehentliches Abschrauben der Mutter 10 vom Schraubenschaft 8 geschaffen werden. Falls der Teil 3″ breiter ist als der Durchbruch 2 kann man so vorgehen, daß bereits in der Fabrik die Schraube mit Mutter 10 und Abstandsteil in die in den Fig. 1, 2 dargestellte betriebsbereite Lage gebracht und dann der Kerbschlag, Körnerschlag oder dergleichen Sicherung 19 aufgebracht wird. Hiernach ist die gesamte Klemmvorrichtung unverlierbar am Dachleitungshalter 1 befestigt. Die Einlegeöffnungen für die Leitungen sind mit 12 beziffert. Die Schraube ist in ihrer Längsrichtung 4 verschieblich. Sie besitzt als Schraubenkopf einen hier zylindrischen Schraubenkörper 5, dessen Außendurchmesser etwas kleiner ist als der Innendurchmesser der Bohrung 2. An seiner Stirnseite 5' ist der Körper 5 mit einem Widerlager in Form eines Bundes 6 versehen, welches so dimensioniert ist, daß es ein Hindurchgleiten bzw. Herausfallen der Schraube aus dem Durchbruch in Richtung des Pfeiles 7 verhindert.

An der der Stirnseite 5' abgewandten Seite des Körpers 5 ist der o. g. Schraubenschaft 8 mit dem Schraubgewinde 9 vorgesehen, auf das die Mutter 10 aufgeschraubt ist. Die Mutter 10 liegt an einem Abstandsteil 11, hier in Form einer topfähnlichen Hülse, an. Im Schraubenkörper 5 befindet sich die Einlegeöffnung 12 für die anzuklemmende Blitzableiterleitung 13, die in diesem Ausführungsbeispiel im Querschnitt rund ist. Die Einlegeöffnung ist so bemessen, daß sie sich in der Längsrichtung 4 über den maximal möglichen Durchmesserbereich der Leitung erstreckt. Im vorliegenden Beispiel ist sie bei in der Endlage (Haltelage) befindlichen Leitung 13 gemäß Abstand a etwa doppelt so breit als die Leitung. Außerdem verläuft die in diesem Beispiel schlitzförmige Einlegeöffnung 12 mit den Seitenflächen 14 dieses Schlitzes derart schräg zur Längsrichtung 4, daß ihre außen gelegene Eintrittsöffnung 37 für die im Querschnitt kreisförmige Leitung 13 näher zum Schraubenschaft 8 und damit im Betrieb auch näher zum Leitungshalter 1 gelegen ist als derjenige Bereich des Schlitzes 12, in dem sich die Leitung 13 gemäß Darstellung in Fig. 3 in der Halte- oder Klemmlage befindet. Dieser »Haken«-ähnliche (Ziffer 3'') Charakter der Schraube, der sich auch aus anderen Ausführungsbeispielen ergibt, gewährleistet, daß nach dem Einbringen der Leitung und dem Anziehen der Mutter 10 die Leitung 13 von selbst in die dargestellte Endlage gelangt, wobei auch Leitungen mit sehr unterschiedlichem Durchmesser eingelegt und sicher geklemmt werden können.

Der Durchmesser des hülsenförmigen Abstandsteiles 11 ist zumindest etwas größer als der des Durchbruches 2, so daß sich der Abstandsteil am Leitungshalter 1 abstützen kann. Der Boden 15 dieses topfähnlichen Abstandshalters besitzt eine Bohrung 18 für den Schraubenschaft, dient als Widerlagerfläche für die Mutter 10 und kann zur Verhinderung eines unbeabsichtigten Lösens der angezogenen Mutter mit einer Sperrverzahnung 16 oder dergleichen versehen sein (siehe Fig. 2a). Der Abstandshalter 11 befindet sich auf der einen und die Leitung 13 auf der anderen Seite des Leitungshalters 1. Der Abstandshalter 11 und auch der Schraubenschaft 8 mit Gewinde 9 haben eine solche Länge, daß mit dem Anziehen der Mutter 10 der Körper 5 der Schraube mit der Einlegeöffnung, die zugleich auch die Funktion einer Klemmöffnung hat, so weit in Pfeilrichtung 7 verschoben werden kann, daß nicht nur im Durchmesser relativ große, sondern auch im Durchmesser außerordentlich kleine Leitungen 13 sicher und fest gegen den Leitungshalter 1 geklemmt werden können.

Durch den o. g. Körnerschlag 19 und ferner duch den Abstandsteil und das Widerlager 6 ist ein Lösen der Klemmvorrichtung vom Leitungshalter 1 ausgeschlossen. Insbesondere kann es nicht mehr passieren, daß der Monteur zu Beginn der Montage, bei der er die Mutter 10 zumindest etwas losschrauben muß, diese versehentlich ganz vom Schaft 8 abschraubt und dadurch u. U. verliert.

Um ein Verkanten der Teile zueinander zu vermeiden, empfiehlt es sich, daß der Außendurchmesser des Körpers 5 nur geringfügig kleiner als der Innendurchmesser des Durchbruches 2 ist, sowie ferner der Innendurchmesser des Abstandsteiles 11 nur geringfügig größer ist als der Außendurchmesser des Schraubenkörpers 5. Hiermit kann der Schraubenkörper 5 sowohl vom Durchbruch 2, als auch vom Abstandsteil 11 geführt werden.

Die erfindungsgemäße Schraubbefestigung kann aus beliebigem, geeigneten Material (z. B. feuerverzinktem Stahl, Zinkdruckguß, Kupferlegierung, oder Kunststoff) bestehen.

Fig. 3 zeigt in der Darstellungsweise der Fig. 1 eine ähnlich ausgebildete Schraubbefestigung mit Abstandsteil 11 und zylindrischem Körper 5, die zur Anklemmung eines Flachleiters 22 geeignet ist. Dazu geht der obere Teil des Körpers 5 in einen Teil 3''' über, der eine ebene Klemmfläche 20 und eine hakenförmige Außennase 21 aufweist. Die Eintrittsöffnung ist ebenfalls mit 37 beziffert. Diese Ausführungsform zeigt ferner, daß man auch auf den Bund 6 gemäß Fig. 1 verzichten kann (dies wäre gemäß der Erfindung auch bei einer Ausführungsform nach Fig. 1 möglich). Auch hier kann man ab Fabrik bereits die Schraube mit Körper 5 und Schaft 8, dem Abstandsteil 11 und der Mutter 10 zusammenfügen und durch den Körnerschlag oder dergleichen 19 zu einer Einheit machen, aus der keine Teile mehr verlierbar sind. Dann muß nur noch auf der Baustelle der Teil 3''' durch den Durchbruch 2 hindurchgesteckt und die Leitung 22 (bzw. 13) eingeklemmt werden. Falls der Teil 3''' so dimensioniert ist, daß er nicht durch den Durchbruch 2 paßt, so kann die Verliersicherung für die Mutter 10 durch einen Körnerschlag oder dergleichen 19 erst dann vorgenommen werden, wenn die Klemmbefestigung bereits durch den Durchbruch 2 hindurchgeführt worden ist.

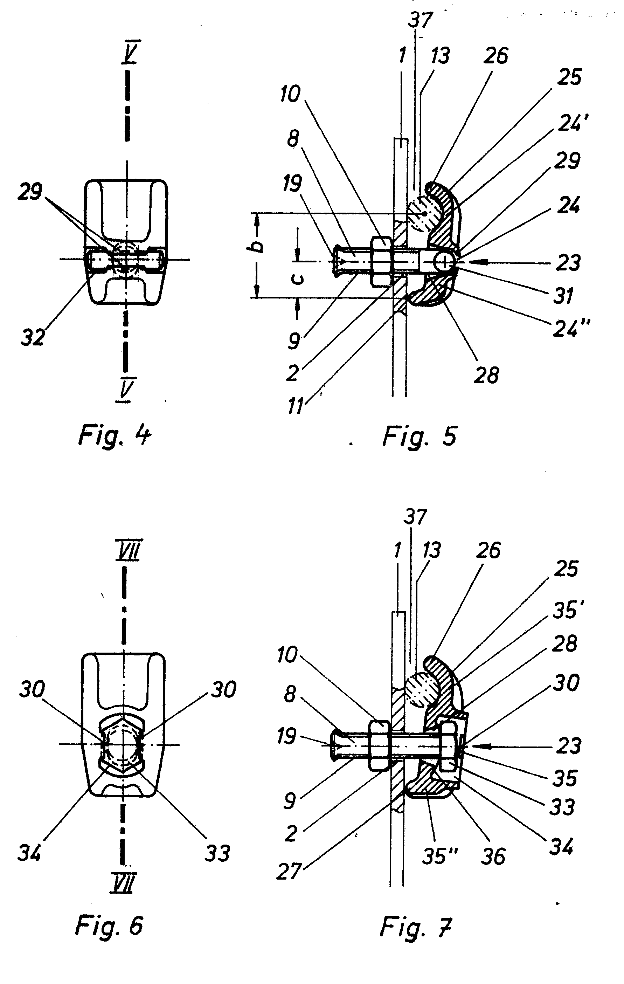

Die Ausführungsbeispiele der Fig. 4, 5 und 6, 7 betreffen die eingangs genannte zweite Ausführungsform der Erfindung, bei der jeweils der backenartige oder hakenförmige Teil ein Hebelarm einer als zweiarmiger Hebel ausgestalteten Klemmbacke ist. Soweit in diesen Ausführungsbeispielen Teile dargestellt und beschrieben sind, die denen der Ausführungsbeispiele nach den Fig. 1 bis 3 gleich sind, wurden hierfür auch die gleichen Bezugsziffern verwendet.

Der Schraubenschaft 8 ist im Ausführungsbeispiel der Fig. 4 und 5 an seiner hier allgemein mit 23 bezeichneten Kopfseite mit einer Klemmbacke 24 versehen, die an ihm schwenkbar gelagert ist. Die Klemmbacke 24 besitzt zwei Hebelarme 24', 24'', die etwa in einer Linie bzw. Flucht liegen. Der Hebelarm 24' ist als backenartiger oder hakenförmiger Teil ausgebildet und ist mit einer als Einlegeöffnung dienenden Auskehlung 25 für das Einlegen der Leitung 13 versehen und endet in einer Haltenase 26, die zusätzlich dem Halt der Leitung 13 dient und sich neben der Eintrittsöffnung 37 befindet. Der andere bevorzugt demgegenüber kürzere Hebelarm 24'' ist an der gleichen Backenseite, an der sich die Auskehlung 25 befindet, mit einem Vorsprung 27 versehen, der zur Auflage auf den Leitungshalter kommt. Es ist ersichtlich, daß mit dem Anziehen der Mutter 10 (das Gewinde des Schraubenschaftes 8 muß entsprechend lang ausgebildet sein) die hierdurch den Schraubenschaft in der Darstellung gemäß den Fig. 5 und 7 nach links ziehende Zugkraft der Mutter eine um das Verhältnis b/c verstärkte Anpreßkraft des Hebelarmes 24' auf die Leitung 13 zur Folge hat. Dabei bedeutet c der Abstand des Vorsprunges 27 von der Längsmittelachse des Schraubenschaftes 8 und b der Abstand des Vorsprunges 27 von der Mitte der Leitung 13. Im vorliegenden Ausführungsbeispiel beträgt der Quotient b/c etwa 2,5, da der Hebelarm 24' größer ist als der Hebelarm 24'' und zu berücksichtigen ist, daß die wirksame Hebellänge b sich aus den wirksamen Hebellängen der Arme 24' und 24'' zusammensetzt.

Um die Schwenk- oder Wippbewegung der Klemmbacke 24 zum Schraubenschaft 8 um einen gewissen Winkelbereich zu ermöglichen und zugleich diesen Winkelbereich zu begrenzen, ist die vom Schraubenschaft 8 durchsetzte Bohrung 28 der Klemmbacke in ihrem Durchmesser vom Schraubenkopf zum freien Schraubenschaftende hin erweitert. An der Übergangsstelle von dem einen Hebelarm 24' zum anderen Hebelarm 24'' befindet sich nicht nur die Bohrung 28, sondern auch der schon genannte Schraubenkopf, an dem die Klemmbacke 24 durch aus ihrem Material herausgedrückte Nasen 29 unverlierbar gehalten ist.

In diesem Ausführungsbeispiel der Fig. 4 und 5 dient als Schraubenkopf ein quer zum Schraubenschaft 8 verlaufender und daran befestigter Lagerstab 31, der zusammen mit dem Schraubenschaft ein »T« bildet. Er greift in eine entsprechend geformte Ausnehmung 32 der Klemmbacke 24 ein und wird von den Nasen 29, die sich am Außenrand der Ausnehmung 32 befinden, übergriffen. Der zwischen den Nasen 29 und dem Boden der Ausnehmung 32 gebildete Lagerraum ist im Durchmesser etwas größer als der Durchmesser des Lagerstabes, so daß ein genügender Spielraum für das Verschwenken der Klemmbacke 24 zum Schraubenschaft 8 gegeben ist.

Eine ähnliche Anordnung zeigt das Ausführungsbeispiel der Fig. 6 und 7. Soweit Teile mit dem Beispiel der Fig. 4, 5 in etwa identisch sind, tragen sie die gleiche Bezugsziffer. Hier dient als Schraubenkopf ein Sechskantkopf 33, der in einer entsprechend geformten, ein Verdrehen der Klemmbacke 35 zum Schraubenschaft 8 verhindernden Ausnehmung 34 der Klemmbacke 35 gelagert ist. Der Hebelarm 35' bildet den backenartigen oder hakenförmigen Teil und der Hebelarm 35'' weist zur Abstützung auf dem Leitungshalter 1 den o. g. Vorsprung 27 auf. Der Abstand zwischen den ebenfalls aus dem Material der Klemmbacke 35 herausgedrückten Nasen 30 und dem Boden der Ausnehmung 34 ist ebenfalls so gewählt, daß die Klemmbacke 35 sich zum Schraubenschaft 8 verschwenken kann. Hierzu ist es von Vorteil, daß der Boden 36 der Ausnehmung 34 nach außen, d. h. in Richtung zum Ende des Schraubenkopfes hin vorgewölbt ist. Damit wird eine kreisförmige Kuppe gebildet, auf der sich die Klemmbacke bei ihrer Schwenkbewegung am Schraubenkopf abwälzen kann. Die Bohrung 28 der Klemmbacke erweitert sich bei dieser Ausgestaltung der Teile in ihrem Durchmesser vom freien Schraubenschaftende hin zum Schraubenkopf.

Die Ausgestaltung der Klemmbacken 24 bzw. 35 bewirkt nicht nur die beschriebene Hebelübersetzung, sondern sorgt auch dafür, daß in der Klemmlage der Schraubenschaft 8 etwa senkrecht zum Leitungshalter 1 verläuft.

Bei einem der Ausführungsbeispiele vorgesehene Merkmale können sinngemäß auch bei einem der anderen Ausführungsbeispiele vorgesehen sein. So kann z. B. die anhand der Fig. 1 bis 3 näher erläuterte Sicherung 19 der Schraubmutter gegen ein unbeabsichtigtes Verlieren mittels eines Körnerschlages oder Kerbschlages an der Stirnseite des Schraubenschaftes 8 auch bei den Ausführungsbeispielen der Fig. 4, 5 und 6, 7 vorgesehen sein. Das gleiche gilt für den Abstandsteil 11 (soweit erforderlich), sowie für die übrigen Merkmale und Vorteile der Ausführungsbeispiele der Fig. 1 bis 3, wie eine Leitungsführung längs und quer zum Leitungshalter oder dergleichen, die Verwendung der genannten Materialien, z. B. eines feuerverzinkten Stahles, eines Zinkdruckgusses oder einer Kupferlegierung oder dergleichen mehr.

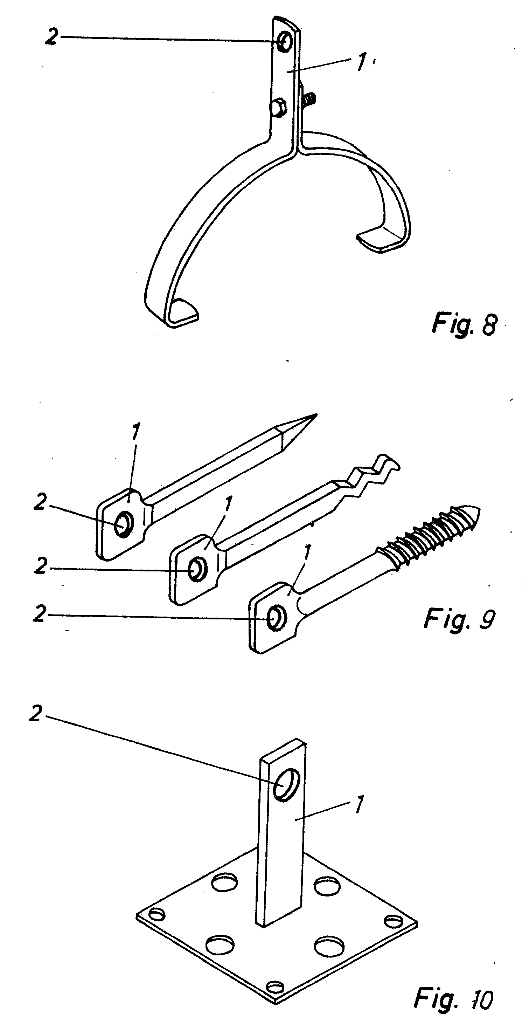

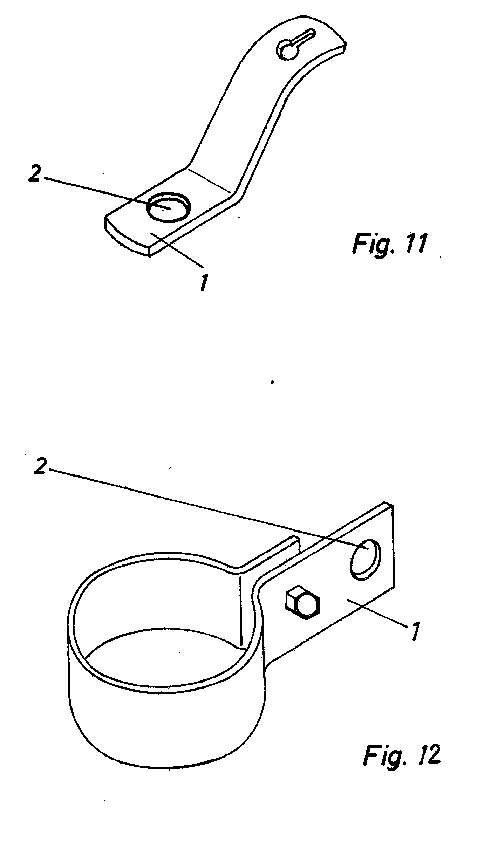

Den schon erwähnten Vorteil, daß am Leitungshalter die Schaffung des Durchbruches, bevorzugt einer zylindrischen Bohrung 2 genügt, zeigen die Fig. 8 bis 12. Hier sind verschiedene, für sich bekannte Ausführungsformen von Leitungshaltern dargestellt, wobei jeweils der Durchbruch 2 nach der Erfindung eingezeichnet ist. Dabei stellt Fig. 12 einen Leitungshalter dar, der um ein Regenfallrohr zu klemmen ist. Außerdem liegt es im Bereich der Erfindung, den Durchbruch für die Aufnahme der Klemmvorrichtung auch an einem anderen Teil als einem Dachleitungshalter vorzusehen, z. B. an einem Tragband.

## Patentansprüche

1. Schraubbefestigung von Blitzableiterleitungen an Leitungshaltern oder dergleichen, wobei eine in einen Durchbruch (2) des Leitungshalters (1) oder dergleichen passende und dazu verschiebbare Schraube mit einer Einlegeöffnung (12) für die Leitung (13; 22) vorgesehen ist, wobei ferner die Einlegeöffnung (12) außenseitig in eine Eintrittsöffnung (37) für das Einlegen der Leitung von der Seite her ausläuft und dort von einem backenartigen oder hakenförmigen Teil (3''; 3''') begrenzt ist, der sich am Schraubenkopf (5) befindet, und wobei der vom Schraubenkopf her durch den Durchbruch (2) hindurchragende und dort mit einer aufgeschraubten Mutter (10) versehene Schraubenschaft (8) ein Schraubgewinde (9) von mindestens solcher Länge aufweist, daß Leitungen (13; 22) des vorgesehenen Durchmesser- oder Dickenbereiches anklemmbar sind, dadurch gekennzeichnet, daß der Gewindeschaft (8) der Schraube ein Abstandsteil (11) durchsetzt, das sich bei eingespannter Leitung (13; 22) am Leitungshalter (1) oder dergleichen abstützt und als Widerlager (15) für die auf den Gewindeschaft (8) aufgeschraubte Feststellmutter (10) dient, wobei die Schraube auch zum Abstandsteil (11) verschiebbar ist, und daß sich die eingespannte Leitung (13; 22) auf der einen und das Abstandsteil (11) auf der anderen Seite des Leitungshalters (1) oder dergleichen bzw. dessen Durchbruches (2) befindet.

2. Schraubbefestigung nach Anspruch 1, dadurch gekennzeichnet, daß die Einlegeöffnung (12) als Schlitz eines den Schraubenkopf bildenden Schraubenkörpers (5) ausgebildet ist, der im Durchbruch (2) frei verschiebbar ist, wobei die dem Schraubenschaft abgewandte Stirnseite (5') des Schraubenkörpers bevorzugt mit einem Widerlager (6), z. B. einem umlaufenden Bund, versehen ist.

3. Schraubbefestigung nach Anspruch 2, dadurch gekennzeichnet, daß der Schraubenkörper (5) zylindrisch ist und sich innerhalb eines kreisförmigen Durchbruches (2) befindet, wobei der Schraubenschaft (8) bevorzugt symmetrisch zur Mittellängsachse des Schraubenkörpers (5) verläuft.

4. Schraubbefestigung nach einem der Ansprüche 1 bis 3, gekennzeichnet durch eine Formgebung der Einlegeöffnung (12) für die Aufnahme einer Rundleitung derart, daß ihre außen gelegene Eintrittsöffnung (37) näher zum Schraubenschaft (8) gelegen ist als der Bereich, in dem sich die Rundleitung (13) in ihrer geklemmten Haltelage befindet.

5. Schraubbefestigung nach Anspruch 4, dadurch gekennzeichnet, daß bei schlitzförmiger Ausbildung der Einlegeöffnung (12) die beiden Begrenzungswände des Schlitzes den genannten Schrägverlauf aufweisen.

6. Schraubbefestigung nach einem der Ansprüche 1 bis 3, dadurch gekennzeichnet, daß die Haube (3) der Einlegeöffnung (12) für die Aufnahme einer Flachleitung (22) mit einer ebenen Anlagefläche (20) und einer äußeren Haltenase (21) versehen ist.

7. Schraubbefestigung nach einem der Ansprüche 1 bis 6, dadurch gekennzeichnet, daß der Abstandsteil (11) als topfähnliche Hülse ausgebildet ist, deren Außendurchmesser größer als der Durchmesser des Durchbruches (2) und deren Innendurchmesser größer als der Außendurchmesser des Schraubenkörpers (5) ist, wobei der Boden (15) der Hülse als Widerlager für die Mutter (10) dient und eine Öffnung (18) aufweist, in der der Schraubenschaft (8) verschieblich gleitet.

8. Schraubbefestigung nach einem der Ansprüche 1 bis 7, dadurch gekennzeichnet, daß die zur Auflage der Mutter (10) bestimmte Seite des Abstandsteiles mit einer Lockerungssicherung für die Mutter, z. B. einer Sperrverzahnung (16), scharfkantigen Vorsprüngen oder dergleichen versehen ist.

9. Schraubbefestigung von Blitzableiterleitungen an Leitungshaltern oder dergleichen, wobei eine in einen Durchbruch (2) des Leitungshalters (1) oder dergleichen passende und dazu verschiebbare Schraube mit einer Einlegeöffnung (25) für die Leitung (13; 22) vorgesehen ist, wobei die Einlegeöffnung (25) außenseitig in eine Eintrittsöffnung (37) für das Einlegen der Leitung von der Seite her ausläuft und dort von einem backenartigen oder hakenförmigen Teil (24'; 35') begrenzt ist, der sich am Schraubenkopf (31; 33) befindet, und wobei der vom Schraubenkopf her durch den Durchbruch (2) hindurchragende und dort mit einer aufgeschraubten Mutter (10) versehene Schraubenschaft (8) ein Schraubgewinde (9) von mindestens solcher Länge aufweist, daß Leitungen (13; 22) des vorgesehenen Durchmesser- oder Dickenbereiches anklemmbar sind, dadurch gekennzeichnet, daß eine um einen gewissen Winkelbereich schwenkbar am Schraubenkopf (31; 33) angelenkte und als zweiarmiger Hebel ausgestaltete Klemmbacke (24, 35) vorgesehen ist, deren einer Hebelarm (24'; 35') als der backenartige oder hakenförmige Teil ausgebildet und mit der Einlegeöffnung (25) für die Aufnahme der Blitzableiterleitung (13) versehen ist und deren anderer Hebelarm (24''; 35'') eine Abstützung oder Vorsprung (27) zwecks Auflage auf den Leitungshalter (1) oder dergleichen aufweist, wobei die Klemmbacke an der Übergangsstelle von dem einen zum anderen Hebelarm vom Schraubenschaft (8) durchsetzt ist.

10. Schraubbefestigung nach Anspruch 9, dadurch gekennzeichnet, daß die Klemmbacke (24; 35) am Schraubenkopf (31; 33) unverlierbar gehalten ist.

11. Schraubbefestigung nach Anspruch 10, dadurch gekennzeichnet, daß dem genannten unverlierbaren Halt aus dem Material der Klemmbacke (24; 35) herausgedrückte Nasen (29, 30) dienen.

12. Schraubbefestigung nach einem der Ansprüche 9 bis 11, dadurch gekennzeichnet, daß die Klemmbacke (24; 35) eine sich in Längsrichtung des Schraubenschaftes (8) im Durchmesser erweiternde Bohrung (28) für die Hindurchführung des Schraubenschaftes (8) aufweist.

13. Schraubbefestigung nach einem der Ansprüche 9 bis 12, dadurch gekennzeichnet, daß als Schraubenkopf ein quer zum Schraubenschaft (8) verlaufender, zu diesem den Querbalken eines »T« bildender Lagerstab (31) dient, daß die Klemmbacke eine der Stabform angepaßte Ausnehmung (32) für die Aufnahme des Lagerstabes (31) aufweist und daß die Nasen (29) von den Außenrändern der Ausnehmung (32) gebildet sind und über den Lagerstab (31) greifen, wobei der von den Nasen (29) und der Ausnehmung (32) gebildete Lagerraum im Durchmesser etwas größer als der Durchmesser des Lagerstabes (31) ist.

14. Schraubbefestigung nach einem der Ansprüche 9 bis 12, dadurch gekennzeichnet, daß als Schraubenkopf ein Mehrkantkopf, z. B. ein Sechskantkopf (33), dient, daß die Klemmbacke (35) eine der Form des Mehrkantkopfes angepaßte Ausnehmung (34) für dessen Aufnahme aufweist, deren Boden (36) nach außen hin, d. h. in Richtung zur freien Stirnfläche des Mehrkantkopfes (33), kuppenartig vorgewölbt ist, und daß der Abstand zwischen den Nasen (30) und dem Boden (36) etwas größer ist als die Dicke des Mehrkantkopfes (34).

15. Schraubbefestigung nach einem der Ansprüche 9 bis 14, dadurch gekennzeichnet, daß der die Auskehlung (25) aufweisende effektive Hebelarm (24'; 35') länger ist als der mit dem Vorsprung (27) versehene effektive Hebelarm (24''; 35'').

16. Schraubbefestigung nach einem der Ansprüche 11 bis 15, dadurch gekennzeichnet, daß ein Abstandsteil (11) gemäß den Ansprüchen 1, 7, 8 vorgesehen ist.

17. Schraubbefestigung nach einem der Ansprüche 1 bis 16, dadurch gekennzeichnet, daß die freie Stirnseite des Schraubenschaftes (8) mit einer Sicherung (19) gegen ein Abschrauben der Mutter (10) versehen ist, z. B. einem Körner- oder Kreuzschlag.

**Claims**

1. Screw fastening of lightning conductor wires to wire holders or the like, wherein a screw, which fits into a passage (2) of the wire holder (1) or the like and is displaceable relative thereto, with an insertion opening (12) for the wire (13; 22) is provided, wherein the insertion opening (12) furthermore at the outside runs out into an entry opening (37) for the insertion of the wire from the side and is there bounded by a cheeklike or hookshaped part (3''; 3'''), which is disposed at the screw head (5), and wherein the screw shank (8), which projects from the screw head through the passage (2) and is there provided with a screwed-on nut (10), displays a screw thread (9) of at least such a length that wires (13; 22) of the envisaged range of diameter or thickness are clampable, characterised thereby, that the threaded shank (8) of the screw passes through a spacer part (11), which when a wire (13; 22) is clamped in bears against the wire holder (1) or the like and serves as counterbearing (15) for the lock nut (10) threaded on the threaded shank (8), wherein the screw is displaceable also relative to the spacer part (11), and that the clamped-in wire (13; 22) is disposed on the one side and the spacer part (11) on the other side of the wire holder (1) or the like or its passage (2).

2. Screw fastening according to claim 1, characterised thereby, that the insertion opening (12) is formed as slot of a screw body (5) forming the screw head and being freely displaceable in the passage (2), wherein the end face (5') of the screw body facing away from the screw shank is preferably provided with a counterbearing (6), for example an encircling shoulder.

3. Screw fastening according to claim 2, characterised thereby, that the screw body (5) is cylindrical and disposed within a circularly shaped passage (2), wherein the screw shank (8) preferably extends symmetrically to the longitudinal centre line of the screw body (5).

4. Screw fastening according to one of the claims 1 to 3, characterised by a shaping of the insertion opening (12) for the reception of a round wire in such a manner its outwardly lying entry opening (37) lies nearer to the screw shank (8) than the region, in which the round wire (13) is disposed in its clamped retained position.

5. Screw fastening according to claim 4, characterised thereby, that in the case of slot-shaped formation of the insertion opening (12), both the boundary walls of the slot display the named oblique course.

6. Screw fastening according to one of the claims 1 to 3, characterised thereby, that the hood (3) of the insertion opening (12) is provided with a planar contact surface (20) and an outer retaining lug (21) for the reception of a flat wire (22).

7. Screw fastening according to one of the claims 1 to 6, characterised thereby, that the spacer part (11) is constructed as potlike sleeve, the external diameter of which is greater than the diameter of the passage (2) and the internal diameter of which is greater than the external diameter of the screw body (5), wherein the base (15) of the sleeve serves as counterbearing for the nut (10) and displays an opening (18), in which the screw shank (8) slides displaceably.

8. Screw fastening according to one of the claims 1 to 7, characterised thereby, that that side of the spacer part, which is intended to be rested on by the nut (10), is provided with protection against loosening of the nut, for example with locking teeth (16), sharp-edged projections or the like.

9. Screw fastening of lightning conductor wires to wire holders or the like, wherein a screw, which fits into a passage (2) of the wire holder (1) or the like and is displaceable relative thereto, with an insertion opening (25) for the wire (13; 22) is provided, wherein the insertion opening (25) at the outside runs out into an entry opening (37) for the insertion of the wire from the side and is there bounded by a cheeklike or hookshaped part (24'; 35'), which is disposed at the screw head (31; 33), and wherein the screw shank (8), which projects from the screw head through the passage (2) and is there provided with a screwed-on nut (10), displays a screw thread (9) of at least such a length that wires (13; 22) of the envisaged range of diameter or thickness are clampable, characterised thereby, that a clamping cheek (24, 35) is provided, which is structured as two-armed lever and articulated at the screw head (31; 33) to be pivotable through a certain angular range and the one lever arm (24'; 35') of which is constructed as the cheeklike or hookshaped part and provided with the insertion opening (25) for the reception of the lightning conductor wire (13) and the other lever arm (24''; 35'') of which displays a stay or projection (27) for the purpose of resting on the wire holder (1) or the like, wherein the clamping cheek is penetrated by the screw shank (8) at the transition from the one to the other lever arm.

10. Screw fastening according to claim 9, characterised thereby, that the clamping cheek (24; 35) is captively retained at the screw head (31; 33).

11. Screw fastening according to claim 10, characterised thereby, that lugs (29, 30) pressed out of the material of the clamping cheek (24; 35) serve the named captive retention.

12. Screw fastening according to one of the claims 9 to 11, characterised thereby, that the clamping cheek (24; 35) displays a bore (28), which enlarges in diameter in longitudinal direction of the screw shank (8), for the conduction of the screw shank (8) therethrough.

13. Screw fastening according to one of the claims 9 to 12, characterised thereby, that a bearing rod (31), which extends transversely to the screw shank (8) and forms the crossbeam of a »T« to this, serves as screw head, that the clamping cheek displays a recess (32), matched to the shape of the rod, for the reception of the bearing rod (31) and that the lugs (29) are formed by the outside rims of the recess (32) and engage over the bearing rod (31), wherein the bearing space formed by the lugs (29) and the recess (32) is somewhat greater in diameter than the diameter of the bearing rod (31).

14. Screw fastening according to one of the claims 9 to 12, characterised thereby, that a polygonal head, for example a hexagonal head (33), serves as screw head, that the clamping cheek (35) displays a recess (34), which is matched to the shape of the polygonal head for the reception thereof and the base (36) of which bowed out in domelike manner outwardly, i. e. in direction of the free and face of the polygonal head (33), and that the spacing between the lugs (30) and the base (36) is somewhat greater than the thickness of the polygonal head (33).

15. Screw fastening according to one of the claims 9 to 14, characterised thereby, that the effective lever arm (24'; 35') displaying the cavity (25) is longer than the effective lever arm (24''; 35'') provided with the projection (27).

16. Screw fastening according to one of the claims 11 to 15, characterised thereby, that a spacer part (11) is provided according to the claims 1, 7 and 8.

17. Screw fastening according to one of the claims 1 to 16, characterised thereby, that the free end face of the screw shank (8) is provided with a protection (19) against an unscrewing of the nut (10), for example a centre punch mark or an oppositely directed twist.

## Revendications

1. Fixation par vis de lignes de paratonnerres sur des supports de lignes ou analogues, une vis venant s'adapter dans un trou (2) du support de ligne (1) ou analogues pouvant se déplacer par rapport à ce dernier et comportant une ouverture d'introduction (12) pour la ligne (13; 22), l'ouverture d'introduction (12) se terminant extérieurement en une ouverture d'entrée (37) pour l'introduction latérale de la ligne, cette ouverture (12) étant délimitée par un élément sous forme de mâchoire ou de crochet (3''; 3''') qui se trouve sur la tête (5) de la vis, tandis que la tige (8) de la vis partant de la tête à travers le trou (2) et sur laquelle est vissé un écrou (10), comporte un filet (9) ayant au moins une longueur calculée de telle sorte que l'on puisse serrer des lignes (13; 22) dont le diamètre ou l'épaisseur se situe dans l'intervalle prévu, caractérisée en ce que la tige filetée (8) de la vis passe à travers un élément d'écartement (11) qui, lorsque la ligne (13; 22) est serrée, vient prendre appui sur le support de ligne (1) ou analogue, tout en faisant également office de butée (15) pour l'écrou de fixation (10) vissé sur la tige filetée (8), la vis pouvant également se déplacer par rapport à l'élément d'écartement (11), la ligne serrée (13; 22) se trouvant sur un côté du support de ligne (1) ou analogue ou de son trou (2), tandis que l'élément d'écartement (11) se trouve de l'autre côté.

2. Fixation par vis suivant la revendication 1, caractérisée en ce que l'ouverture d'introduction (12) est réalisée sous forme d'une fente d'un corps de vis (5) formant la tête de vis et pouvant se déplacer librement dans le trou (2), la face frontale (5') du corps de la vis, qui est éloignée de la tige de la vis, comportant, de préférence, une butée (6), par exemple, un collet périphérique.

3. Fixation par vis suivant la revendication 2, caractérisée en ce que le corps de vis (5) est cylindrique et se trouve à l'intérieur d'un trou circulaire (2), la tige (8) de la vis s'étendant, de préférence, symétriquement par rapport à l'axe central longitudinal du corps (5) de la vis.

4. Fixation par vis suivant une des revendications 1 à 3, caractérisée en ce que l'ouverture d'introduction (12) a une configuration lui permettant de recevoir une ligne circulaire, tandis que son ouverture d'entrée (37) située extérieurement est plus proche de la tige (8) de la vis que la zone dans laquelle se trouve la ligne circulaire (13) lorsqu'elle est serrée dans sa position de retenue.

5. Fixation par vis suivant la revendication 4, caractérisée en ce que, lorsque l'ouverture d'introduction (12) est réalisée sous forme d'une fente, les deux parois de limitation de cette dernière présentent l'inclinaison dont il a été fait mention.

6. Fixation par vis suivant une des revendications 1 à 3, caractérisée en ce que la calotte (3) de l'ouverture d'introduction (12) comporte, pour recevoir une ligne plate (22), une surface de butée plane (20) et un nez de retenue extérieur (21).

7. Fixation par vis suivant une des revendications 1 à 6, caractérisée en ce que l'élément d'écartement (11) est réalisé sous forme d'une douille analogue à un pot dont le diamètre extérieur est plus grand que le diamètre du trou (2) et dont le diamètre intérieur est plus grand que le diamètre extérieur du corps (5) de la vis, le fond (15) de cette douille faisant office de butée pour l'écrou (10), tandis qu'il comporte une ouverture (18) dans laquelle la tige (8) de la vis peut coulisser.

8. Fixation par vis suivant une des revendications 1 à 7, caractérisée en ce que le côté de l'élément d'écartement qui est destiné à recevoir l'écrou (10), comporte une sécurité contre le desserrage de l'écrou, par exemple, des dents de blocage (16), des saillies à arêtes vives ou analogues.

9. Fixation par vis de lignes de paratonnerres sur des supports de lignes ou analogues, une vis s'adaptant dans un trou (2) du support de ligne (1) ou analogue et pouvant se déplacer par rapport à ce dernier comportant une ouverture d'introduction (25) par la ligne (13; 22), cette ouverture d'introduction (25) se terminant extérieurement en une ouverture d'entrée (37) pour l'introduction latérale de la ligne, cette ouverture (25) y étant délimitée par un élément en forme de mâchoire ou de crochet (24'; 35') qui se trouve sur la tête (31; 33) de la vis, tandis que la tige (8) de la vis partant de la tête à travers le trou (2) et sur laquelle est vissé un écrou (10), comporte un filet (9) ayant au moins une longueur calculée de telle sorte que l'on puisse serrer des lignes (13; 22) dont le diamètre ou l'épaisseur se situe dans l'intervalle prévu, caractérisée en ce qu'on prévoit une mâchoire de serrage (24, 35) articulée sur la tête de la vis (31; 33) de façon à pouvoir pivoter sur une certaine zone angulaire, tout en étant réalisée sous forme d'un levier à deux bras, un bras de levier (24', 35') de cette mâchoire étant réalisé sous forme de l'élément analogue à une mâchoire ou un crochet, tandis qu'il comporte l'ouverture d'introduction (25) pour recevoir la ligne de paratonnerre (13) et que l'autre bras de levier (24'', 35'') comporte un support ou une saillie (27) venant se placer sur le support de ligne (1) ou analogue, la mâchoire de serrage étant traversée par la tige de la vis (8) au point de transition entre un bras de levier et l'autre.

10. Fixation par vis suivant la revendication 9, caractérisée en ce que la mâchoire de serrage (24; 35) est maintenue de manière imperdable sur la tête de la vis (31; 33).

11. Fixation par vis suivant la revendication 10, caractérisée en ce que des nez (29, 30) emboutis hors de la matière de la mâchoire de serrage (24; 35) servent à assurer le maintien précité de manière imperdable.

12. Fixation par vis suivant une des revendications 9 à 11, caractérisée en ce que la mâchoire de serrage (24; 35) comporte, pour le passage de la tige (8) de la vis, un passage (28) dont le diamètre s'élargit dans le sens longitudinal de cette tige (8).

13. Fixation par vis suivant une des revendications 9 à 12, caractérisée en ce que comme tête de vis, on prévoit une barre d'appui (31) s'étendant transversalement par rapport à la tige (8) de la vis et formant, avec cette dernière, la barre transversale d'un »T«, la mâchoire de serrage comportant un évidement (32) adapté à la forme de la barre d'appui (31) pour recevoir cette dernière, tandis que les nez (29) sont formés par les bords extérieurs de l'évidement (32) et viennent s'accrocher sur la barre d'appui (31), le diamètre de l'espace d'appui formé par les nez (29) et l'évidement (32) étant un peu plus grand que celui de la barre d'appui (31).

14. Fixation par vis suivant une des revendications 9 à 12, caractérisée en ce que, comme tête de vis, on prévoit une tête polygonale, par exemple, une tête hexagonale (33), la mâchoire de serrage (35) comportant un évidement (34) adapté à la forme de la tête polygonale afin de recevoir cette dernière, le fond (36) de cet évidement étant préalablement bombé en forme de calotte vers l'extérieur, c'est-à-dire en direction de la face frontale libre de la tête polygonale (33), tandis que l'écartement entre les nez (30) et le fond (36) est un peu plus grand que l'épaisseur de la tête polygonale (34).

15. Fixation par vis suivant une des revendications 9 à 14, caractérisée en ce que le bras de levier effectif (24') comportant la gorge (25) est plus long que le bras de levier effectif (24''; 35'') comportant la saillie (27).

16. Fixation par vis suivant une des revendications 11 à 15, caractérisée en ce qu'on prévoit un élément d'écartement (11) suivant les revendications 1, 7 et 8.

17. Fixation par vis suivant une des revendications 1 à 16, caractérisée en ce que la face frontale libre de la tige (8) de la vis comporte une sécurité (19) contre un dévissage de l'écrou (10), par exemple, un matage ou un entaillage.

Fig. 1

Fig. 2

Fig. 2 a

Fig. 3

Fig. 4

Fig. 5

Fig. 6

Fig. 7

Fig. 8

Fig. 9

Fig. 10

15

*Fig. 11*

*Fig. 12*